(19) Europäisches Patentamt
European Patent Office
Office européen des brevets

(11) Publication number: **0 019 097 B1**

(12) # EUROPEAN PATENT SPECIFICATION

(45) Date of publication of patent specification: **15.08.84**

(51) Int. Cl.³: **C 08 F 20/18**, C 08 F 2/44

(21) Application number: **80102114.8**

(22) Date of filing: **18.04.80**

(54) **Process for preparing a Methacrylic resin composition having a high solar radiant energy absorbing property.**

(30) Priority: **20.04.79 JP 49240/79**

(43) Date of publication of application:
**26.11.80 Bulletin 80/24**

(45) Publication of the grant of the patent:
**15.08.84 Bulletin 84/33**

(84) Designated Contracting States:
**DE FR GB IT**

(56) References cited:
**CH - A - 463 790**
**US - A - 3 647 729**

(73) Proprietor: **MITSUBISHI RAYON CO. LTD.**
**3-19, Kyobashi 2-chome Chuo-Ku**
**Tokyo 104 (JP)**

(72) Inventor: **Kamada, Kazumasa**
**3-2-401, Kurokawa-3-chome**
**Ootake-shi (JP)**
Inventor: **Nakai, Yoshio**
**6-16, Motomachi-3-chome**
**Ootake-shi (JP)**
Inventor: **Abe, Kazunori**
**2-1, Kurokawa-3-chome**
**Ootake-shi (JP)**

(74) Representative: **Patentanwälte TER MEER - MÜLLER - STEINMEISTER**
**Triftstrasse 4**
**D-8000 München 22 (DE)**

**EP 0 019 097 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a process for preparing a methacrylic resin composition having a high solar radiant energy absorbing property and comprising a methacrylic resin and an organic copper compound.

Methacrylic resins have excellent transparency and weatherability. Therefore they have been used for so-called glazing uses such as windows, ceiling windows and doors of buildings and vehicles. Since the transmission of solar radiant energy of said materials is so high, the internal temperature rise will be noticeable, where the resins are exposed to the direct sunshine.

In order to control said internal temperature rise, such measures as further fitting a blind inside the window or cooling the room have been taken. However, where a blind is fitted, it will become dark in the room, and it will become hard to see outside through the window, so that the high transparency of the methacrylic resin cannot be used. Further a cooling of the room is essentially undesirable from the standpoint of saving energy.

Under the above mentioned circumstances, it has been attempted to effectively lower the transmission of solar radiant energy by modifying the methacrylic resin itself while preventing the reduction of the visible light transmission. In the present invention, a resin is required to have a high solar radiant energy absorbing property, when it absorbs comparatively much of the solar radiant energy while having a high visible light transmission.

The spectral distribution of the solar radiant energy and the relative luminous efficiency are mentioned in various literature. For example, in the Japanese Industrial Standard JIS R3208 "Heat Ray Absorbing Glass", the spectral distribution of the solar radiant energy and the relative luminous efficiency are defined in detail. According to JIS R3208, more than 80% of the solar radiant energy is transmitted by rays having a wavelength in the range of 400 to 1,100 nm (nanometers). From the relative luminous efficiency defined in JIS R3208, it is found that the visible light transmission is determined substantially by the transmission of the light having a wavelength in the range of 500 to 650 nm.

Considering the fact that light in the wavelength range longer than 1,100 nm is strongly absorbed by polymethyl methacrylate and that light in the wavelength range shorter than 400 nm can be substantially absorbed by incorporating a commercial ultraviolet light absorbent into the methacrylic resin, it could be a favorable method to add a substance selectively and strongly absorbing light in the wavelength range of 400 to 500 nm and 650 to 1,100 nm into a methacrylic resin, in order to effectively lower the solar radiant transmission while preventing the reduction of the visible light transmission.

By incorporating a commercial yellow dye into a resin, the resin article can selectively and strongly absorb the light in the wavelength range of 400 to 500 nm. In this case, however, the resin will be unavoidably coloured yellow, or if any other coloured substance is present, a colour combined with it. Therefore, only where the yellowing of the resin is of no importance, will this be a desirable method to obtain a resin having a low transmission of light in the wavelength range of 400 to 500 nm. However, unless this method is used together with the method of lowering the transmission of light having a wavelength range of 650 to 1,100 nm, the solar radiant energy absorbing property will not be sufficient for practical use.

By incorporating into a resin a commercial blue or greenish dye it is possible to have the resin absorb light in the wavelength range of 650 to 1,100 nm. However, though the reduction of the visible light transmission is large, the lowering of the solar radiant transmission is small, and therefore no sufficient solar radiant energy absorbing property can be obtained.

As other methods, for example US—A—3,647,729 suggests a method wherein an organic nickel compound is added to a methacrylic resin and JP—A—5888/1973 discloses a method wherein a methacrylic resin composition is made from methyl methacrylate, an organic compound of nickel, cobalt or copper and an unsaturated carboxylic acid. This latter method is insufficient especially as far as the visible light transmission is concerned (see controls 1 to 4 below).

However, the above mentioned known techniques have insufficient performance and are not practical. That is to say, the absorbance of bivalent nickel ions (Ni(II)) is so small, that in order to absorb sufficiently the solar radiant energy, a large amount of organic compound containing bivalent nickel, must be added, having the result that the physical properties such a mechanical strength of the resin are reduced irrespective of the existence of an unsaturated carboxylic acid.

Further, there are defects in that, where an organic compound of cobalt or copper and unsaturated carboxylic acid are added to a methacrylic resin, if the added amount of the organic compound of cobalt or copper has to be increased so as to sufficiently lower the solar radiant energy transmission, at the same time, a reduction of the visible light transmission will also be large, so that no favourable solar radiant energy adsorbing property can be obtained.

The CH—A—463 790 discloses a method for the polymerization or the copolymerization of vinyl- and/or vinylidene monomers by carrying out the polymerization in a polar solvent using a catalyst mixture comprising at least one organo metallic compound containing a metal belonging to group IVa of the Periodic System (Ge, Sn, Pb), a cupric compound and a compound containing an element

belonging to group Va of the Periodic System. As the latter compound used for complexing the cuprous ions are used organic compounds of phosphorus acid. After the polymerization the polymer or the copolymer is separated from the non-reacted monomer and the residual components of the catalyst mixture.

As a result of investigations to overcome the defects of the conventional techniques as mentioned above it has now been found, that when both an organic compound containing a specified amount of cupric ions and a compound having at least one P—O—H bond in the molecule are incorporated into a methacrylic resin, the above mentioned defects will all be solved and a methacrylic resin composition having a high solar radiant energy absorbing property will be obtained.

Therefore the subject matter of the present invention is a process for preparing a methacrylic resin composition having a high solar radiant energy absorbing property comprising a methacrylic resin and an organic copper compound, which is characterized by polymerizing a mixture comprising a polymerizable material selected from methyl methacrylate or a polymerizable unsaturated monomer mixture containing at least 50% by weight of methyl methacrylate or a partially polymerized product thereof, 0.01 to 5 parts by weight, calculated as cupric ion, of an organic compound (A) containing cupric ions selected from the group consisting of salts of carboxylic acids and cupric ions and complex salts of acetylacetone or acetoacetic acid and cupric ions, per 100 parts by weight of said polymerizable material and 0.1 to 10 moles of a compound (B) having at least one P—O—H bond in the molecule selected from the group consisting of derivatives of phosphoric acid represented by the following formula

$$(HO)_n\text{—}\overset{\overset{\displaystyle O}{\|}}{P}\text{—}(OR^1)_{3-n} \qquad \cdots\cdots\cdots (I)$$

(wherein

$R^1$ is selected from alkyl, allyl, aryl, aralkyl, alkaryl, acryloxyalkyl and methacryloxyalkyl radicals of 1 to 18 carbon atoms and their derivatives and n is 1 or 2) and derivatives of phosphorous acid represented by the following formula

$$(HO)_n\text{—}P\text{—}(OR^1)_{3-n} \qquad \cdots\cdots\cdots (II)$$

(wherein

$R^1$ and n are respectively the same as are defined in the above mentioned formula (I)), per mole of the above mentioned organic compound (A), in the presence of a radical polymerization initiator.

In the following the process claimed is described more in detail making reference to the drawings enclosed wherein

Figs. 1 and 3 are graphs showing the relationship between the visible light transmission and the solar radiant energy transmission of several resin plates,

Fig. 2 is a graph showing the relationship between the wavelength and the ray transmission of several resin plates.

The process of the present invention is preferably carried out by bulk polymerization or more preferably by mold polymerization.

The polymerizable material to be used in the process of the present invention is methyl methacrylate alone or a polymerizable unsaturated monomer mixture containing at least 50% by weight of methyl methacrylate or a partially polymerized product thereof. As concrete examples of the polymerizable unsaturated monomer copolymerizable with the methyl methacrylate, there can be enumerated (meth)acrylic acid (meaning acrylic acid or methacrylic acid here and hereafter), esters of (meth)acrylic acid and an alcohol represented by methyl acrylate, ethyl(meth)acrylate, butyl(meth)acrylate, stearyl(meth)acrylate, 2-ethylhexyl(meth)acrylate ethyleneglycol di(meth)acrylate, diethyleneglycol di(meth)acrylate, tetraethyleneglycol di(meth)acrylate, trimethylolethane tri(meth)-acrylate, trimethylolpropane tri(meth)acrylate, pentaerythritol tetra(meth)acrylate and allyl (meth)acrylate, 2-hydroxyethyl (meth)acrylate; (meth)acrylamide and derivatives thereof; styrene and its derivatives; and vinyl acetate. Where a polymerizable unsaturated monomer mixture containing at least 50% by weight of methyl methacrylate is used as a polymerizable material, it contains preferably at least 60% by weight, or more preferably at least 80% by weight of methyl methacrylate. A mixture of 85 to 100% by weight of methyl methacrylate and 0 to 15% by weight of a member selected from among methyl acrylate, ethyl acrylate, butyl acrylate, (meth) acrylic acid and 2-hydroxyethyl (meth)acrylate or a mixture thereof is particularly preferable.

Where a partially polymerized product is used as a polymerizable material, said partially polymerized product which contains 5 to 35% by weight of polymers is preferably obtained by polymerizing methyl methacrylate or the mixture thereof with the other unsaturated monomers in the bulk state at the boiling point of the mixture.

Preferred concrete examples of the organic compound (A) containing cupric ions used in the present invention are salts of carboxylic acids such as formic acid, acetic acid, propionic acid, valeric

acid, hexanoic acid, octanoic acid, decanoic acid, lauric acid, stearic acid, oleic acid, 2-ethylhexanoic acid, naphthenic acid and benzoic acid with cupric ions and complex salts of acetylacetone or acetoacetic acid with cupric ions. According to the present invention, the organic compound (A) containing cupric ions is used in an amount of 0.01 to 5 parts by weight, calculated as cupric ion, per 100 parts by weight of methyl methacrylate or a polymerizable unsaturated monomer mixture containing at least 50% by weight of methyl methcrylate or its partially polymerized product. Where the amount of the organic compound (A) containinig cupric ions does not reach 0.01 part by weight calculated as cupric ions the solar radiant absorbing property of the resin will not be sufficient. On the other hand, where it exceeds 5 parts by weight, such physical properties as the mechanical strength of the resin will be noticeably reduced. It is more preferred to add 0.025 to 0.5 part by weight of the organic compound (A), containing cupric ions, calculated as cupric ions.

As preferred concrete examples of the compound (B) having at least one P—O—H bond in the molecule used in the present invention, there can be enumerated derivatives of phosphoric acid represented by the following formula

$$(HO)_n—\overset{\overset{\displaystyle O}{\|}}{P}—(OR^1)_{3-n} \qquad \ldots\ldots\ (I)$$

(wherein

$R^1$ is selected from alkyl, allyl, aryl, aralkyl, alkaryl and (meth)acryloxyalkyl radicals of 1 to 18 carbon atoms and their derivatives and n is 1 or 2 as, for example, ethyl phosphate (meaning monoethyl phosphate here and hereinafter), di-ethyl phosphate, butyl phosphate, di-butyl phosphate, hexyl phosphate, di-hexyl phosphate, heptyl phosphate, di-heptyl phosphate, octyl phosphate, di-octyl phosphate, lauryl phosphate, di-lauryl phosphate, stearyl phosphate, di-stearyl phosphate, 2-ethylhexyl phosphate, bis(2-ethylhexyl) phosphate, oleyl phosphate, di-oleyl phosphate, phenyl phosphate, di-phenyl phosphate, nonylphenyl phosphate, bis(nonylphenyl)phosphate, 2-chlorethyl phosphate, bis(2-chloroethyl)phosphate, 2,3-dichloropropyl phosphate, and bis(2,3-dichloropropyl) phosphate or $\gamma$-methacryloxypropyl phosphate and bis($\gamma$-methacryloxypropyl)phosphate; and such derivatives of phosphorous acid represented by the following formula

$$(HO)_n—P—(OR^1)_{3-n} \qquad \ldots\ldots\ (II)$$

(wherein

$R^1$ and n are respectively the same as are defined in the above mentioned formula (I), as, for example, ethyl phosphite, di-ethyl phosphite, butyl phosphite, di-butyl phosphite, hexyl phosphite, dihexyl phosphite, heptyl phosphite, di-heptyl phosphite, octyl phosphite, di-octyl phosphite, lauryl phosphite, di-lauryl phosphite, stearyl phosphite, di-stearyl phosphite, 2-ethylhexyl phosphite, bis(2-ethylhexyl) phosphite, oleyl phosphite, dioleyl phosphite, phenyl phosphite, di-phenyl phosphite, nonylphenyl phosphite, bis(nonlyphenyl) phosphite, 2-chlorethyl phosphite, bis(2-chlorethyl) phosphite, 2,3-dichloropropyl phosphite and bis(2,3-dichloropropyl) phosphite or $\gamma$-methacryloxypropyl phosphite and bis($\gamma$-methacryloxypropyl) phosphite etc. can be enumerated as concrete examples.

According to the present invention, the compound (B) having at least one P—O—H bond in the molecule is added in an amount of 0.1 to 10 moles per mole of the organic compound containing cupric ions. Where the amount is less than 0.1 moles the solar radiant energy absorbing property will not be sufficiently improved. On the other hand, where it exceeds 10 moles, the mechanical strength of the resin material obtained will be noticeably reduced. When increasing the amount of the compound (B) having at least one P—O—H bond in the molecule within the above mentioned range of 0.1 to 10 moles, the solar radiant energy absorbing property will gradually improve but, at the same time, the mechanical strength of the resin may be reduced. Therefore, the amount of the compound (B) having at least one P—O—H bond in the molecule may be selected by properly judging the relation between the degree of the improvement of the solar radiant energy absorbing property and other physical properties.

When working the process of the invention, the compound (B) having at least one P—O—H bond in the molecule or (meth)acrylic acid or 2-hydroxyethyl (meth)acrylate where it is used, can be used as cosolvents for dissolving the organic compound (A) containing cupric ions in the polymerizable material comprising methyl methacrylate as a main component or its partially polymerized product. However, depending on the kind and amount of the organic compound (A) containing cupric ions the solubility may be insufficient. In order to improve the solubility of the cupric ions it is in this case therefore preferred to add a member selected from carboxylic acids such as formic acid, acetic acid, propionic acid, hexanoic acid, octanoic acid, decanoic acid, lauric acid, stearic acid, 2-ethylhexanoic acid, naphthenic acid and benzoic acid and alcohols such as octyl alcohol, lauryl alcohol, ethyleneglycol, diethyleneglycol and tetraethyleneglycol in an amount of at most 5 parts by weight or more preferably at most 2 parts by weight per 100 parts by weight of methyl methacrylate or a polymerizable unsaturated monomer mixture comprising methyl methacrylate as main component or its partially polymerized product.

In working the present invention various additives usually used in producing methacrylic resins may be added. As concrete examples of such additives, there can be enumerated dyes and pigments used for colouring, antioxidants, stabilizers such as ultraviolet ray absorbents, flame retardants, plasticizers and mold releasing agents improving the release of the resin material from the mold.

Among these additives, it is preferred to add an ultraviolet ray absorbent in order to prevent such deteriorations caused by ultraviolet light such as discoloration, crazing and skin roughening of the resin article. Further, the addition of the ultraviolet ray absorbent can reduce the solar radiation transmission without reducing the visible light transmission of the resin article and is therefore preferred from the point of improving the solar radiant energy absorbing property.

Such ultraviolet ray absorbent to be used are required to fully absorb radiation in the wavelength range deteriorating the resin plate and without reacting with the cupric ions to form a complex hardly soluble in the polymer having methyl methacrylate units as main component. As concrete examples of ultraviolet ray absorbents having such properties, there can be enumerated 2-hydroxybenzophenone derivatives such as 2-hydroxy-4-methoxybenzophenone, 2-hydroxy-4-octyloxybenzophenone, 2-hydroxy-4-decyloxybenzophenone, 2-hydroxy-4-dodecyloxybenzophenone, 2-hydroxy-4,4′-dimethoxybenzophenone, 2-hydroxy-4,4′-dibutoxybenzophenone, 2-hydroxy-4,4′-dioctyloxybenzophenone, 2-hydroxy-4-methoxyl-4′-chlorobenzophenone, 2-hydroxy-4-methoxy-2′,4′-dichlorobenzophenone and 2-hydroxy-4-methoxy-2′-carboxybenzophenone, benzotriazole derivatives such as 2-(2′-hydroxy-3′,5′-ditertiarybutylphenyl)benzotriazole, 2-(2′-hydroxy-3′,5′-ditertiarybutylphenyl) 3-chlorobenzotriazole and 2-(2′-hydroxy-3′,5′-di(2″,2″-dimethyl propyl)-phenyl)benzotriazole and salicyclic acid esters such as phenyl salicylate, p-ethylphenyl salicylate and p-tertiarybutylphenyl salicylate. It is preferred to add 0.01 to 1 part by weight of said ultraviolet ray absorbent to 100 parts by weight of the polymer having methyl methacrylate units as main component. It is more preferred to add 0.1 to 0.5 parts by weight thereof.

Further, the solar radiant energy absorbing property of the resin can be improved by adding a yellow dye in an amount not obstructing the object of the present invention.

Among the dyes and pigments to be used to colour the resin, carbon black provides the resin with an anti-glaring effect and has an absorption over the entire wavelength range of solar radiation from 290 to 2,140 nm. Therefore, if carbon black is added in the process of the present invention, a resin having high antiglare and solar radiant energy absorbing properties will be obtained. Preferably 0.0001 to 0.05 parts by weight of carbon black are added per 100 parts by weight of a polymer having methyl methacrylate units as main component.

Further, when the methacrylic resin mixture is polymerized, radical polymerization initiators such as an azo compound or an organic peroxide are preferably used in an amount of 0.0001 to 0.5 parts by weight, or more preferably 0.001 to 0,2 parts by weight per 100 parts by weight of methyl methacrylate or the polymerizable unsaturated monomer mixture containing at least 50% by weight of methyl methacrylate, or its partially polymerized material.

As concrete examples of the azo compounds to be used as radical polymerization initiators there can be enumerated 2,2′-azobis (isobutyronitrile),2,2′-azobis (2,4-dimethylvaleronitrile) and 2,2′-azobis (2,4-dimethyl, 4-methoxyvaleronitrile).

On the other hand, concrete examples of organic peroxides are di-tertiarybutyl peroxide, tertiarybutylcumyl peroxide, dicumyl peroxide $\alpha,\alpha'$-bis(tertiarybutylperoxy) hexane, $\alpha,\alpha'$,-bis(tertiarybutylperoxy) p-isopropylbenzene, 2,5-dimethyl-2,5-di(tertiarybutylperoxy) hexane, 2,5-dimethyl-2,5-di-(tertiarybutylperoxy) hexyne-3, tertiarybutyl peroxyacetate, tertiarybutyl peroxyisobutyrate, tertiarybutyl peroxypivalate, tertiarybutyl-2-ethyl hexanoate, tertiarybutyl peroxylaurate, tertiarybutyl peroxybenzoate, ditertiarybutyl diperoxyphthalate, 2,5′-dimethyl-2,5-di(benzoyl) peroxy) hexane, tertiarybutyl peroxymaleic acid, tertiarybutyl peroxyisopropylcarbonate, lauroyl peroxide, stearyl peroxide, 3,5,5-trimethylhexanoyl peroxide, succinic acid peroxide, benzoyl peroxide, p-chlorobenzoyl peroxide, p-chlorobenzoyl peroxide, 2,4-dichlorobenzoyl peroxide, di-isopropyl peroxydicarbonate, di-2-ethylhexyl peroxydicarbonate, acetyl peroxide, propionyl peroxide, isobutyl peroxide, octanoyl peroxide, decanoyl peroxide and acetylcyclohexylsulfonyl peroxide.

Each of the above mentioned radical polymerization initiators may be used alone or in combination of two or more.

When at least one member selected from the group consisting of di-tertiarybutyl peroxide, tertiarybutylcumyl peroxide, dicumyl peroxide, $\alpha,\alpha'$-bis(tertiarybutylperoxide) hexane, $\alpha,\alpha'$-bis(tertiarybutylperoxy) p-isopropylbenzene, 2,5-dimethyl-2,5-di-(tertiarybutylperoxy) hexane and 2,5-dimethyl-2,5-di(tertiarybutylperoxy) hexyne-3 is used with said other polymerization initiator the discoloration of the resin obtained by heating at the same time of the heat molding is much lower than that of a resin to which such organic peroxide is not added. Therefore, it is preferred to add one or more of the above mentioned organic peroxides to the resin to the heat molded, preferably in an amount of 0.05 to 1 parts by weight or more preferably 0.1 to 0.5 parts by weight of an organic peroxide selected from the above mentioned di-tertiary-butyl peroxide, tertiarybutylcumyl peroxide and dicumyl peroxide per 100 parts by weight of the polymer having methyl methacrylate units as a main component.

Concrete polymerizing methods in the case of producing a methacrylic resin article by casting polymerization are a method wherein the above mentioned mixture is poured in between two opposed

tempered glass plates sealed with a gasket at the circumference of the glass plate in an ordinary manner and is heated, and a method wherein the mixture is continuously poured from upstream into a space sealed with two endless belts mirror-polished on one surface and gaskets advancing at the same speed in the same direction and is heated to be continuously polymerized.

Though the polymerization can be carried out at various temperatures, depending on the kind of radical polymerization initiation, generally the temperature is in the range of 40 to 140°C. Preferably, the polymerization is carried out first at a temperature in the range of 40 to 90°C, and thereafter at a temperature in the range of 100 to 140°C.

The thickness of the resin plate obtained by the casting polymerization is not particularly limited but is preferably the thickness of an ordinarily marketed methacrylic resin plate, that is, within the range of 1 to 65 mm.

The present invention shall be explained in the following with reference to concrete examples in which the parts represent parts by weight and the rate of visible light transmission and the rate of solar radiant energy transmission are calculated in accordance with the JIS method R 3208 using the absorption spectrum converted to that for a specimen having a thickness of 5 mm, wherein the wavelength is divided by 10 nm steps.

Example 1

| | |
|---|---|
| A mixture consisting of methyl methcrylate | 100 parts |
| cupric acetate ($Cu(CH_3COO)_2H_2O$) | 0.2 part, |
| a mixture of 2-ethylhexyl phosphate and bis(2-ethylhexyl) phosphate (of trade name "JP508" made by Johoku Chemical Industrial Co.) | 0.2 part, |
| 2-ethylhexanoic acid | 1 part, |
| Tinuvin-P® (ultraviolet ray absorbent made by Ciba Geigy Co.) | 0.01 part, |
| and 2,2'-azobisisobutylonitrile | 0.08 part |

was poured in between two tempered glass plates with a gasket at the circumference of the glass plates in an ordinary manner, was dipped for 5 hours in a water bath at 65°C and was then heated for 2 hours in an air bath at 110°C to complete the polymerization. After cooling the material was released from the tempered glass plates to obtain a light blue transparent resin plate having a thickness of 3 mm.

The visible light transmission of the plate was 75.8%, and the solar radiant energy transmission was 65.3%, which means that it has a high solar radiant energy absorbing property.

Example 2

A mixture consisting of

| | |
|---|---|
| a partially polymerized product of methyl methacrylate (having a polymer content of 20%) | 100 parts |
| methacrylic acid | 2 parts, |
| cupric acetate ($Cu(CH_3COO)_2 \cdot H_2O$) | 0.4 part, |
| di-butyl phosphite | 0.4 part |
| "Sumiplast Yellow GGN"® (yellow dye product by Sumitomo Chemical Industrial Co.) | 0.005 part, |
| Tinuvin-P® | 0.01 part, |
| and 2,2'-azobis(2,4-dimethyl-valeronitrile) | 0.057 part |

was continuously poured from upstream into a space sealed with two endless stainless steel belts mirror-polished on one surface and gaskets advancing at the same speed in the same direction in an ordinary manner, was passed for 28 minutes through a hot water shower zone at 80°C and was then passed for 14 minutes through a far-infrared ray heater heated zone to be heated up to a maximum temperature of 135°C and a gradually cooling zone to continuously obtain a yellowish green transparent resin plate having a thickness of 4 mm.

The visible light transmission of this plate was 73.2%, and the solar radiant energy transmission was 48.9%, and so that it has a high solar radiant energy absorbing property.

Examples 3 to 5

A mixture of the following composition in which the amounts of the cupric acetate and "JP 504" were those mentioned in Table I was made:

| | |
|---|---|
| methyl methacrylate | 100 parts, |
| cupric acetate ($Cu(CH_3COO)_2 \cdot H_2O$) | varied amount |
| a mixture of butyl phosphate and di-butyl phosphate (of trade name "JP 504" produced by Johoku Chemical Industrial Co.) | varied amount |
| octanoic acid | 2 parts, |
| and 2,2'-azobisisobutylonitrile | 0.07 part |

The mixture was poured into a mold to be polymerized in the same manner as described in Example 1 to obtain a transparent resin plate having a thickness of 3 mm.

The results of the measurement of the visible light transmission and solar radiant energy transmission of the resin plates are referred to in Table I.

TABLE I

| | Amount of cupric acetate (parts) | Amount of JP504 (parts) | Visible light trans-mission (%) | Solar radiant energy trans-mission (%) |
|---|---|---|---|---|
| Example 3 | 0.1 | 0.1 | 88.2 | 74.3 |
| Example 4 | 0.2 | 0.2 | 83.1 | 65.4 |
| Example 5 | 0.4 | 0.4 | 78.7 | 55.5 |

Controls 1 to 4

A mixture to be poured in was made of

| | |
|---|---|
| methyl methacrylate | 100 parts |
| cupric acetate ($Cu(CH_3COO)_2 \cdot H_2O$) | varied amount |
| methacrylic acid | 2 parts, |
| and 2,2'-azobiisobutylonitrile | 0.07 parts, |

wherein

the amount of cupric acetate used was as shown in Table II, and was poured into a mold in the same manner as in Example 1 to obtain a transparent resin plate having a thickness of 3 mm.

The visible light transmission and the solar radiant energy transmission of the resin plates obtained were measured, the results being shown in Table II.

TABLE II

| | Amount of cupric acetate (parts) | Amount of JP504 (parts) | Visible light trans-mission (%) | Solar radiant energy trans-mission (%) |
|---|---|---|---|---|
| Control 1 | 0.05 | 0 | 72.5 | 72.0 |
| Control 2 | 0.1 | 0 | 62.9 | 65.2 |
| Control 3 | 0.2 | 0 | 53.3 | 58.5 |
| Control 4 | 0.4 | 0 | 33.0 | 43.6 |

The results of Examples 3 to 5 and those of Controls 1 to 4 are shown in Fig. 1 by taking the visible light transmission on the abscissa and the solar radiation transmission on the ordinate.

It can clearly be seen from Fig. 1 that the resin plate to which "JP 504" was added has a much higher visible light transmission than the resin plate without "JP 504".

The spectral transmission curves of 600 to 1,500 nm of the resin plate obtained in Example 5 having a thickness of 3 mm together with that of Control 3 are shown in Fig. 2.

It is clearly seen from Fig. 2 that, by the addition of "JP 504", the absorption by the cupric ions moves to the longer wavelength side.

Example 6

Instead of the mixture in Example 1, a mixture consisting of

| | |
|---|---|
| methyl methacrylate | 95 parts, |
| methyl acrylate | 5 parts, |
| cupric oleate ($Cu(C_{18}H_{33}O_2)_2$) | 0.8 part, |
| a mixture of 2-chloroethyl phosphate and bis(2-chloroethyl) phosphate (of tradename "JPC 502") produced by Johoku Chemical Industrial Co.) | 0.4 part |
| and benzoyl peroxide | 0.06 part |

was prepared and otherwise the operation of Example 1 was repeated to obtain a light blue transparent resin plate.

The visible light transmission of this plate was 76.6%, and the solar radiant energy transmission was 62.9%, and so that it has a high solar radiant absorbing property.

Example 7

A mixture consisting of

| | |
|---|---|
| a partially polymerized product of methyl methacrylate (having a polymer content of 20%) | 99 parts |
| 2-hydroxyethyl methacrylate | 1 part |
| n-octanoic acid | 2 parts |
| cupric acetate ($Cu(CH_3COO)_2 \cdot H_2O$) | 0.4 part |
| butyl phosphate | 0.06 part |
| di-butyl phosphate | 0.54 part |
| 2-hydroxy-4-methoxybenzophenone | 0.3 part |
| 2,2'-azobis-(2,4-dimethylvalero-nitrile) | 0.026 part |
| and benzoyl peroxide | 0.025 part |

was poured continuously from upstream into a space sealed with two endless stainless steel belts each mirror-polished on one surface and gaskets advancing at the same speed in the same direction in an ordinary manner, and was passed for 36.7 minutes through a hot water zone at 82°C and was then passed for 18.3 minutes through a far-infrared ray heater heating zone heated to a maximum temperature of 110°C and a gradually cooling zone to obtain a light bluish green transparent resin plate having a thickness of 5 mm continuously from below.

The visible light transmission of this plate was 76.2% and the solar radiant energy transmission was 52.6%, and so it has a high solar radiant energy absorbing property.

When this resin plate was submitted to accelerated ageing by exposure with a weatherometer (Model WE—2 manufactured by Toyo Rika Co.) for 1,100 hours, the visible light transmission was 54.9% which is not substantially different from the values before the exposure, which shows a high solar radiant energy absorbing property.

The material did substantially vary in the appearance and has a high weatherproofness.

Example 8

In the same manner as in Example 7 except that the mixture to be poured in was changed to be of

| | |
|---|---|
| partially polymerized product of methyl methacrylate) (containing 22% polymer) | 99.5 parts |
| 2-hydroxyethyl methacrylate | 0.5 part |
| n-hexanoic acid | 1.5 parts |
| cupric formate | 0.5 part |
| di-heptyl phosphate | 0.7 part |
| 2-(2'-hydroxy-3',5'-ditertiary-butylphenyl) benzotriazole | 0.5 part |
| 2,2'-azobis(2,4-dimethyl-valeronitrile) | 0.026 part |
| lauroyl peroxide | 0.05 part |

a light bluish green transparent plate having a thickness of 6 mm was obtained.

The visible light transmission of this resin plate was 77.6% and the solar radiant energy transmission was 53.5% which shows a high solar radiant energy absorbing property.

When this resin plate was exposed for one year at an angle of 45 degrees to the horizontal as directed to the south outdoors in Ohtake-shi, Hiroshima-ken, Japan, the visible light transmission of it was 77.6% and the solar radiation transmission was 53.6% which is not substantially different from the values before the exposure and the plate was not recognized to vary in the appearance and colour from before the exposure.

Examples 9 to 13

In the same manner as in Example 2 except that the mixture to be poured in was made of

| | |
|---|---|
| partially polymerized product of methyl methacrylate (of a polymer content of 20%) | 99 parts |
| methacrylic acid | 1 part |
| cupric acetate ($Cu(CH_3COO)_2 \cdot H_2O$) | 0.2 part |
| dibutyl phosphate | 0.35 part |
| 2-hydroxy-4-octyloyloxy-benzophenone | 0.2 part |
| carbon black type pigment (Tradename "ANC 901" produced by Toyo Ink Manufacturing Co.) | varied amount |
| 2,2′-azobis (2,4-dimethyl) valeronitrile | 0.05 part |
| and tertiarybutyl peroxyisobutyrate | 0.025 part |

and a carbon black type pigment was added in the amount mentioned in Table III, whereby a rather bluish brown transparent resin plate having a thickness of 3 mm was obtained.

The visible light transmission and the solar radiation transmission of these plates have the values shown in Table 3, showing a high solar radiant energy absorbing property, and they have an antiglare property.

Controls 5 to 9

The same operation was repeated except that the cupric acetate and dibutyl phosphate were removed from the mixture to be poured in Examples 9 to 13 to obtain a brown transparent resin plate.

The visible light transmission and the solar radiation transmission of the thus obtained resin plates have the values shown in Table III.

A graph made by plotting the visible light transmissions of the resin plates obtained in Examples 9 to 13 and Controls 5 to 9 on the abscissa and the solar radiant energy transmissions of them on the ordinate is shown in Fig. 3.

It is to be seen from Fig. 3 that the resin plate made by combining the dibutyl phosphate and cupric acetate with carbon black type pigment has a higher solar radiant energy absorbing property than the resin plate made by using the carbon black type pigment alone.

TABLE III

| | Amount of ANC 901 (parts) | Amount of cupric acetate (parts) | Amount of dibutyl phosphate (%) | Visible light transmission (%) | Solar radiant energy transmission (%) |
|---|---|---|---|---|---|
| Example 9 | 0.0023 | 0.2 | 0.35 | 71.1 | 56.3 |
| Example 10 | 0.0046 | ditto | ditto | 62.0 | 50.5 |
| Example 11 | 0.0069 | ditto | ditto | 52.6 | 45.3 |
| Example 12 | 0.0092 | ditto | ditto | 45.7 | 40.8 |
| Example 13 | 0.0115 | ditto | ditto | 38.9 | 36.9 |
| Control 5 | 0.0023 | 0 | 0 | 78.2 | 74.8 |
| Control 6 | 0.0046 | ditto | ditto | 66.6 | 66.2 |
| Control 7 | 0.0069 | ditto | ditto | 55.8 | 58.0 |
| Control 8 | 0.0092 | ditto | ditto | 47.1 | 51.3 |
| Control 9 | 0.0115 | ditto | ditto | 40.5 | 45.7 |

Example 14

The same operation as in Example 1 was repeated except that the mixture to be poured in was made of

| | |
|---|---|
| a partially polymerized product of methyl methacrylate (containing 6.5% polymer) | 100 parts |
| copper acetate | 0.4 part |
| diethyleneglycol | 1 part |
| diethyl phosphate | 0.8 part |
| p-tertiarybutylphenyl salicylate | 0.3 part |
| 2,2'-azobis(2,4-dimethylvaleronitrile) | 0.02 part |
| and ditertiarybutyl peroxide | 0.5 part |

to obtain a light blue transparent resin plate having a thickness of 3 mm.

The visible light transmission of this resin plate was 79.2% and the solar radiation transmission was 55.7% showing a high solar radiant energy absorbing property.

When this resin plate was heated for 30 minutes in a hot air circulating furnace warmed to 150°C, the tone did not substantially vary from the tone of the resin plate before being heated, the visible light transmission was 79.5%, the solar radiant energy transmission was 56.2% and these values did not substantially vary from those before the plate was heated and the solar radiant energy absorbing property was high.

Examples 15 to 17

The same operation was repeated except that the di-tertiarybutyl peroxide used in Example 14 was changed to the compound mentioned in Table IV to obtain a light blue transparent resin plate.

The visible transmissions and solar radiant energy transmissions of such resin plates are shown in Table IV demonstrating a high solar radiant energy absorbing property.

The variation of the tone of the resin plate after heating the plate for 30 minutes in a hot air circulation furnace warmed to 150°C in the same manner as in Example 14 is shown in Table IV.

It is found from Table IV that the resin plates made by adding dicumyl peroxide and tertiarybutylcumyl peroxide are excellent in the resistance against discoloration by heating.

TABLE IV

| | Amount of the substitute for di-tertiarybutyl peroxide in Example 14 (parts) | Visible light transmission (%) | Solar radiant energy transmission (%) | Discoloration by heating |
|---|---|---|---|---|
| Example 15 | Dicumyl peroxide 0.3 | 77.6 | 53.3 | Substantially no discoloration |
| Example 16 | Tertiarybutylcumyl peroxide 0.3 | 78.5 | 54.7 | ditto |
| Example 17 | None | 79.4 | 55.8 | The yellowishness became stronger and the discoloration was seen clearly |

## Claims

1. A process for preparing a methacrylic resin composition having a high solar radiant energy absorbing property comprising a methacrylic resin and an organic copper compound, characterized by polymerizing a mixture comprising a polymerizable material selected from methyl methacrylate or a polymerizable unsaturated monomer mixture containing at least 50% by weight of methyl methacrylate or a partially polymerized product thereof,

0.01 to 5 parts by weight, calculated as cupric ion, of an organic compound (A) containing cupric ions selected from the group consisting of salts of carboxylic acids and cupric ions and complex salts of acetylacetone or acetoacetic acid and cupric ions, per 100 parts by weight of said polymerizable material, and

0.1 to 10 moles of a compound (B) having at least one P—O—H bond in the molecule selected from the group consisting of derivatives of phosphoric acid represented by the following formula

$$(HO)_n\!-\!\overset{\overset{\large O}{\|}}{P}\!-\!(OR^1)_{3-n} \qquad \ldots\ldots (I)$$

(wherein

$R^1$ is selected from alkyl, allyl, aryl, aralkyl, alkaryl, acryloxyalkyl and methacryloxyalkyl radicals of 1 to 18 carbon atoms and their derivatives and n is 1 or 2) and derivatives of phosphorus acid represented by the following formula

$$(HO)_n\!-\!P\!-\!(OR^1)_{3-n} \qquad \ldots\ldots (II)$$

(wherein

$R^1$ and n are respectively the same as are defined in the above mentioned formula (I)), per mole of the above mentioned organic compound (A), in the presence of a radical polymerization initiator.

2. The process according to claim 1, characterized in that the carboxylic acid is selected from group consisting of formic acid, acetic acid, propionic acid, hexanoic acid, octanoic acid, decanoic acid, lauric acid, stearic acid, 2-ethylhexanoic acid, naphthenic acid and benzoic acid.

3. The process according to claim 1, characterized in that the radical polymerization initiator is selected from azo-compounds and organic peroxides.

4. The process according to claim 1, characterized in that at least one organic peroxide selected from di-tert.-butyl peroxide, tert.-butyl cumyl peroxide, dicumyl peroxide, $\alpha,\alpha'$-bis(tert.-butyl peroxy) hexane, 2,5-di-methyl-2,5-di(tert.-butyl peroxy) hexyne-3 is used together with another radical polymerization initiator.

5. The process according to claim 1, characterized in that an ultraviolet ray absorbent is added to the polymerizable material in an amount of from 0.01 to 1.0 parts by weight per 100 parts by weight of said material.

6. The process according to claim 1, characterized in that carbon black is added to the polymerizable material in an amount of from 0.0001 to 0.05 parts by weight per 100 parts by weight of said material.

## Patentansprüche

1. Verfahren zur Herstellung einer Methacrylharzmasse mit hohem Absorptionsvermögen für Sonnenstrahlungsenergie, enthaltend ein Methacrylharz und eine organische Kupferverbindung, dadurch gekennzeichnet, daß man eine Mischung, die ein polymerisierbares Material ausgewählt aus Methylmethacrylat und einer Mischung von polymerisierbaren ungesättigten Monomeren, die mindestens 50 Gew.-% Methylmethacrylat enthält, oder eines teilweise polymerisierten Produkts davon,

0,01 bis 5 Gewichtsteile, als Kupfer(II)-ionen gerechnet, einer organischen, Kupfer(II)-ionen enthaltenden Verbindung (A) ausgewählt aus der Gruppe, die Salze von Carbonsäuren und Kupfer(II)-ionen und Komplexsalze von Acetylaceton oder Acetoessigsäure und Kupfer(II)-ionen umfaßt, pro 100 Gewichtsteile des polymerisierbaren Materials, und

0,1 bis 10 Mol einer Verbindung (B), die mindestens eine P—O—H-Bindung im Molekül aufweist, die aus der Gruppe ausgewählt ist, die Derivate der Phosphorsäure der folgenden Formel

$$(HO)_n\!-\!\overset{\overset{\large O}{\|}}{P}\!-\!(OR^1)_{3-n} \qquad \ldots\ldots (I)$$

(worin $R^1$ aus Alkyl-, Allyl, Aryl-, Aralkyl-, Alkaryl-, Acryloxyalkyl- und Methacryloxyalkyl-Gruppen mit 1 bis 18 Kohlenstoffatomen und deren Derivaten ausgewählt ist und n 1 oder 2 bedeutet) und Derivate der phosphorigen Säure der folgenden Formel

$$(HO)_n—P—(OR^1)_{3-n} \quad \ldots\ldots (II)$$

(in der $R^1$ und n die oben bezüglich der Formel (I) angegebenen Bedeutungen besitzen) umfaßt, pro Mol der oben angesprochenen organischen Verbindung (A), enthält, in Gegenwart eines radikalischen Polymerisationsinitiators polymerisiert.

2. Verfahren nach Anspruch 1, dadurch gekennzeichnet, daß die Carbonsäure aus der Gruppe ausgewählt ist, die Ameisensäure, Essigsäure, Propionsäure, Hexansäure, Octansäure, Decansäure, Laurinsäure, Stearinsäure, 2-Ethylhexansäure, Naphthensäure und Benzoesäure umfaßt.

3. Verfahren nach Anspruch 1, dadurch gekennzeichnet, daß der radikalische Polymerisationsinitiator aus Azoverbindungen und organischen Peroxiden ausgewählt ist.

4. Verfahren nach Anspruch 1, dadurch gekennzeichnet, daß mindestens ein organisches Peroxid ausgewählt aus Di-tert.-butylperoxid, tert.-Butylcumylperoxid, Dicumylperoxid, $\alpha,\alpha'$-Bis(tert.-butylperoxy)-hexan und 2,5-Dimethyl-2,5-di(tert.-butylperoxy)-hexin-3 zusammen mit einem anderen radikalischen Polymerisationsinitiator verwendet wird.

5. Verfahren nach Anspruch 1, dadurch gekennzeichnet, daß dem polymerisierbaren Material ein ultraviolette Strahlung absorbierendes Mittel in einer Menge von 0,01 bis 1,0 Gewichtsteilen pro 100 Gewichtsteile des Materials, zugesetzt wird.

6. Verfahren nach Anspruch 1, dadurch gekennzeichnet, daß dem polymerisierbaren Material Ruß in einer Menge von 0,0001 bis 0,05 Gewichtsteile pro 100 Gewichtsteile des Materials zugesetzt wird.

**Revendications**

1. Procédé de préparation d'une composition de résine méthacrylique ayant une capacité élevée d'absorption de la lumière solaire radiante comprenant une résine méthacrylique et un composé organique du cuivre, caractérisé en ce qu'on polymérise un mélange contenant une matière polymérisable choisie parmi le méthacrylate de méthyle et un mélange de monomères insaturés polymérisables contenant au moins 50% en poids de méthacrylate de méthyle ou d'un de ses produits partiellement polymérisés, 0,01 à 5 parties en poids, calculées en ion cuivrique, d'un composé organique (A) contenant des ions cuivriques choisi dans le groupe constitué des sels d'acides carboxyliques et des ions cuivriques et des sels complexes de l'acétylacétone ou de l'acide acéto-acétique et des ions cuivriques pour 100 parties en poids de cette matière polymérisable, et 0,1 à 10 moles d'un composé (B) ayant au moins une liaison P—O—H dans sa molécule, choisi dans le groupe constitué de dérivés de l'acide phosphorique représentés par la formule suivante

$$(HO)_n—\overset{\overset{\displaystyle O}{\|}}{P}—(OR^1)_{3-n} \quad (I)$$

(dans laquelle $R^1$ est choisi parmi les radicaux alkyle, allyle, aryle, aralkyle, alcaryle, acryloxyalkyl et méthacryloxyalkyle en $C_1$—$C_{18}$ et leurs dérivés, et n est 1 ou 2) et des dérivés de l'acide phosphoreux représentés par la formule suivante

$$(HO)_n—P—(OR^1)_{3-n} \quad (II)$$

(dans laquelle $R^1$ et n sont respectivement tels que définis dans la formule (I) ci-dessus) par mole du composé organique (A) ci-dessus, en présence d'un agent d'amorçage de polymérisation radicalaire.

2. Procédé suivant la revendication 1, caractérisé en ce que l'acide carboxylique est choisi dans le groupe constitué de l'acide formique, l'acide acétique, l'acide propionique, l'acide hexanoïque, l'acide octanoïque, l'acide, décanoïque, l'acide laurique, l'acide stéarique, l'acide 2-éthylhexanoïque, l'acide naphtènique et l'acide benzoïque.

3. Procédé suivant la revendication 1, caractérisé en ce que l'agent d'amorçage de polymérisation radicalaire est choisi parmi les composés azoïques et les peroxydes organiques.

4. Procédé suivant la revendication 1, caractérisé en ce qu'on utilise au moins un peroxyde organique choisi parmi les peroxyde de di-tert-butyle, le peroxyde de di-tert-butyle-cumyle, le peroxyde de dicumyle, l'$\alpha,\alpha'$-bis (tert-butyl peroxy) hexane, le 2,5-di-méthyl-2,5-di(tert-butyl peroxy)hexyne-3 en même temps qu'un autre agent d'amorçage de polymérisation radicalaire.

5. Procédé suivant la revendication 1, caractérisé en ce qu'on ajoute un absorbeur de rayons ultraviolets à la matière polymérisable dans la proportion de 0,1 à 1,0 partie en poids pour 100 parties en poids de cette matière.

6. Procédé suivant la revendication 1, caractérisé en ce qu'on ajoute du noir de carbone à la matière polymérisable dans la proportion de 0,0001 à 0,05 partie en poids pour 100 parties de cette matière.

FIG. 1

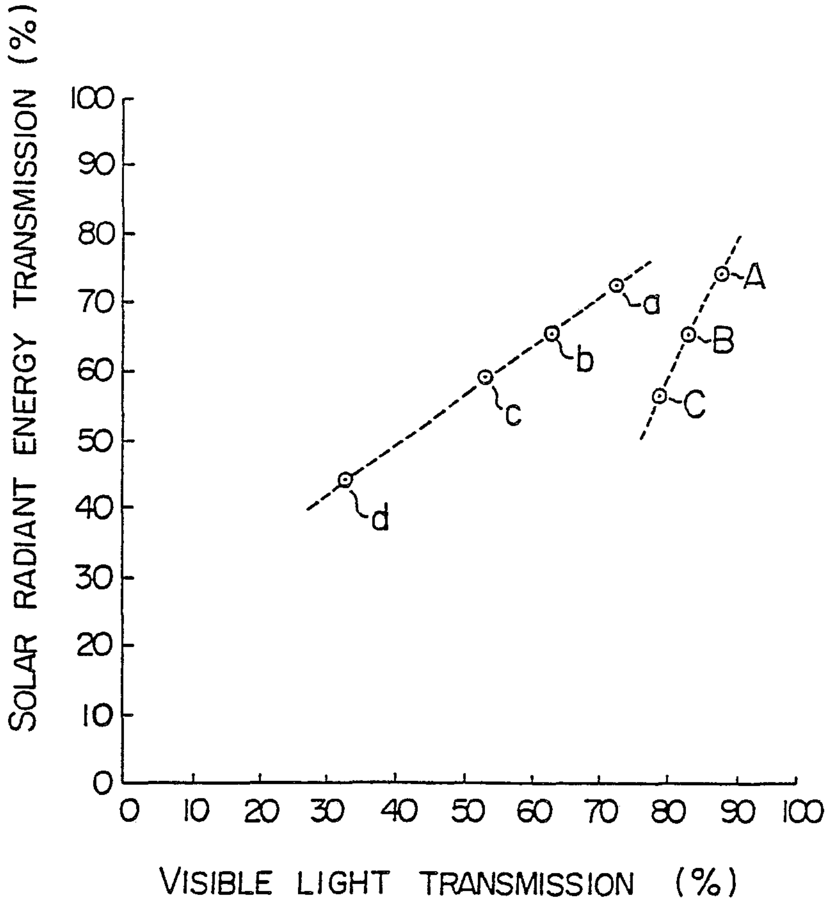


| | | | | | |
|---|---|---|---|---|---|
| A | EXAMPLE | 3 | a | CONTROL | 1 |
| B | EXAMPLE | 4 | b | CONTROL | 2 |
| C | EXAMPLE | 5 | c | CONTROL | 3 |
| | | | d | CONTROL | 4 |

FIG. 2

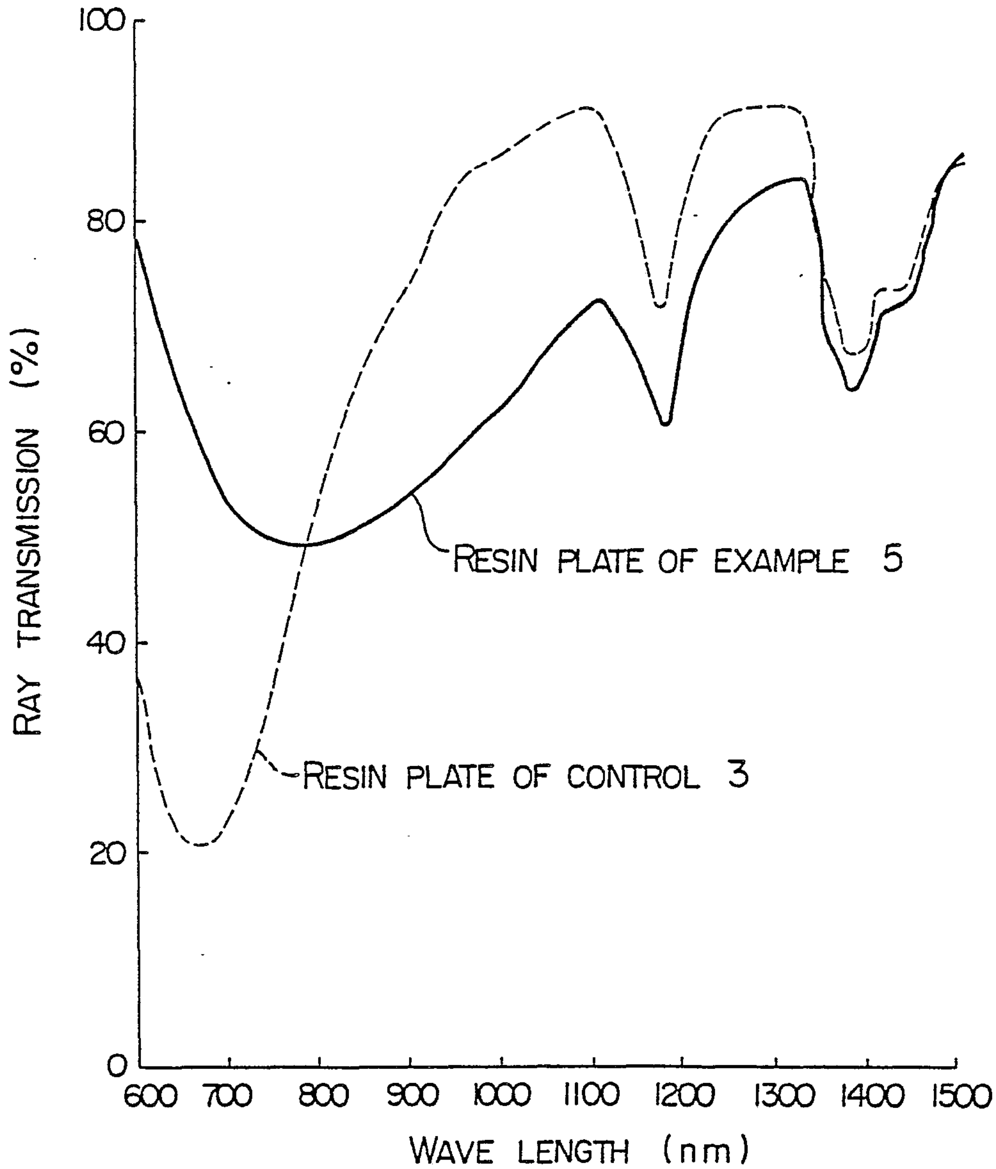
100
80
60
40
20
0
RAY TRANSMISSION (%)
600
700
800
900
1000
1100
1200
1300
1400
1500
WAVE LENGTH (nm)
RESIN PLATE OF EXAMPLE 5
RESIN PLATE OF CONTROL 3

FIG. 3

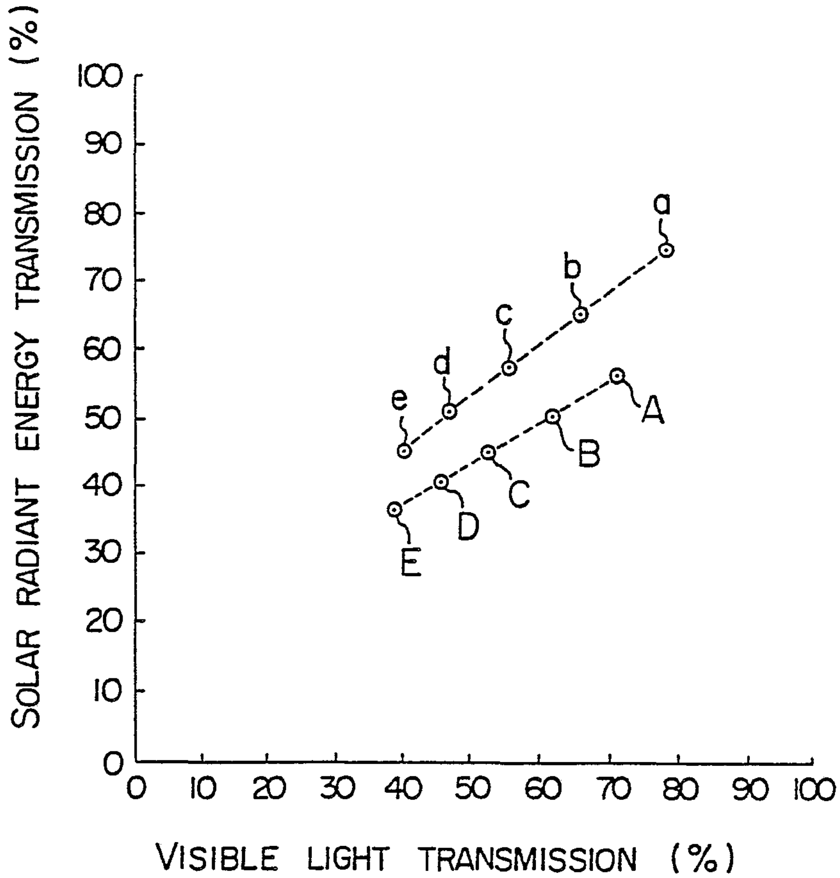


| | | | | | |
|---|---|---|---|---|---|
| A | EXAMPLE | 9 | a | CONTROL | 5 |
| B | EXAMPLE | 10 | b | CONTROL | 6 |
| C | EXAMPLE | 11 | c | CONTROL | 7 |
| D | EXAMPLE | 12 | d | CONTROL | 8 |
| E | EXAMPLE | 13 | e | CONTROL | 9 |